# EUROPEAN PATENT APPLICATION

(11) **EP 1 879 360 A1**
(43) Date of publication of application: **16.01.2008**
(21) Application number: 06116878.7
(22) Date of filing: 10.07.2006
(51) Int. Cl.: H04L 29/12, G06Q 10/00

(54) **Maintaining corporate contact information in mobile terminal**

(71) Applicant: Sysopen Digia Oyj, 00380 Helsinki (FI)
(72) Inventor: Kölbl, Wolfgang, 01900, Nurmijärvi (FI); Tulonen, Kai, 02940, Espoo (FI); Siivola, Juha, 00130, Helsinki (FI)
(74) Representative: Pykälä, Timo Tapani

(57) **Abstract**

Maintenance of corporate contact information in a mobile terminal is disclosed. The mobile terminal (110) comprises: an interface module (208) to receive wirelessly corporate contact information from a corporate network server (100), and to store the received corporate contact information in a corporate address book (218); a search module (210) to search the corporate address book (218) for corporate contact information with an identifier of incoming wireless communication (222); and a presentation module (212) to present the found corporate contact information to a user of the mobile terminal (110) in relation to the incoming wireless communication (222).

## Description

### Field

The invention relates to a mobile terminal, a computer program loadable into a mobile terminal, a corporate network server, a computer program loadable into a corporate network server, a system for maintaining corporate contact information in a mobile terminal, and a method for maintaining corporate contact information in a mobile terminal.

### Background

A mobile terminal is able to display contact information in relation to incoming wireless communication by searching a personal address book of the mobile terminal for contact information with an identifier of incoming wireless communication. In large organizations the maintenance of a personal address book is difficult, if not impossible. Another solution is to obtain the contact information from directory inquiries; however, this solution has several disadvantages: it brings about significant costs for the organization and does not recognize the title and office location of the caller, for example.

### Brief description of the invention

The present invention seeks to provide an improved mobile terminal, an improved computer program loadable into a mobile terminal, an improved corporate network server, an improved computer program loadable into a corporate network server, an improved system for maintaining corporate contact information in a mobile terminal, and an improved method for maintaining corporate contact information in a mobile terminal.

According to an aspect of the present invention, there is provided a mobile terminal as specified in claim 1.

According to another aspect of the present invention, there is provided a computer program loadable into a mobile terminal as specified in claim 9.

According to another aspect of the present invention, there is provided a corporate network server as specified in claim 10.

According to another aspect of the present invention, there is provided a computer program loadable into a corporate network server as specified in claim 13.

According to another aspect of the present invention, there is provided a system for maintaining corporate contact information in mobile terminal as specified in claim 14.

According to another aspect of the present invention, there is provided a method for maintaining corporate contact information in mobile terminal as specified in claim 15.

According to another aspect of the present invention, there is provided a mobile terminal as specified in claim 16.

According to another aspect of the present invention, there is provided a corporate network server as specified in claim 17.

The invention is cost-effective and it provides the user of the mobile terminal with the desired information in relation to incoming wireless communication.

### List of drawings

Embodiments of the invention are described below by way of example and with reference to the accompanying drawings, in which
Figure 1 illustrates an embodiment of a corporate network server;
Figure 2 illustrates embodiments of a corporate network server and a mobile terminal; and
Figure 3 illustrates an embodiment of a method for maintaining corporate contact information in a mobile terminal.

### Description of embodiments

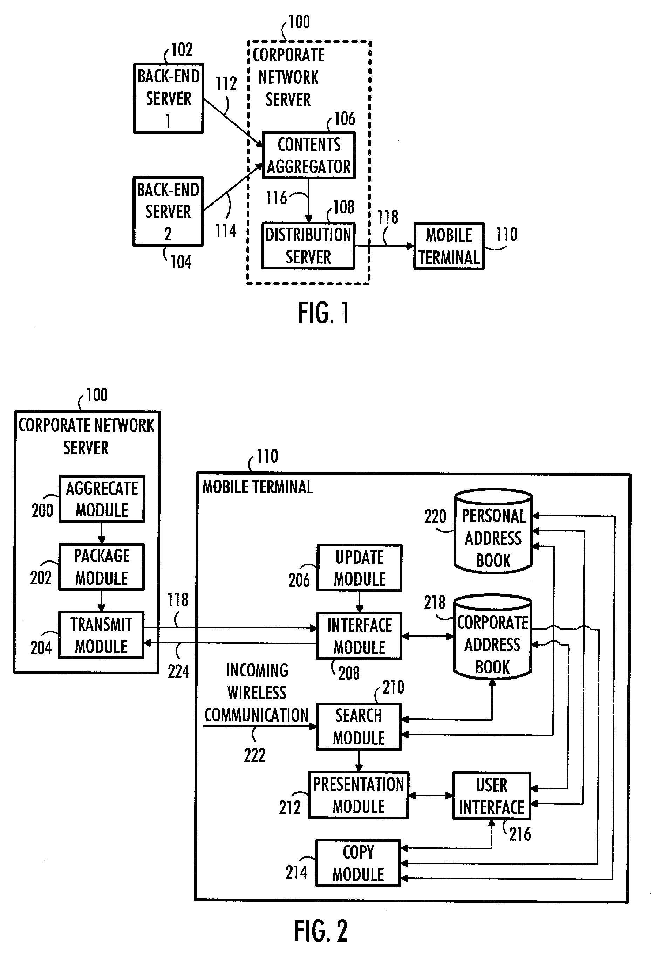

With reference to Figure 1, examine an embodiment of a corporate network server 100. The purpose of the corporate network server 100 is to collect corporate contact information from various sources. These sources include back-end servers 102, 104 of the corporation. The back-end server 102 may be a mail server of the corporation, such as a Microsoft Exchange® server. The back-end server 104 may also be another server used by the corporation, a Lotus Notes® server, for example. The corporate contact information may in part also originate from outside the corporation, and it may be imported into the corporate network server 100 by various means for transferring data.

The corporate network server 100 may include several servers, depending on the processing power / memory capacity needed: a contents aggregator 106 and a distribution server 108, for example. The contents aggregator 106 may retrieve data from the back-end servers 102, 104. The format of the retrieved data may be proprietary 112, 114, in which case the contents aggregator 106 converts the retrieved data into a suitable format 116. The distribution server 108 is responsible for wirelessly transmitting the corporate contact information 118 to a mobile terminal 110.

A mobile terminal 110 refers to a wireless mobile communication device operating with or without a subscriber identification module (SIM), including, but not limited to, the following types of devices: mobile phone, Smart-phone, personal digital assistant (PDA), handset. The wireless connection may be implemented with a wireless transceiver operating according to GSM (Global System for Mobile Communications), WCDMA (Wideband Code Division Multiple Access), WLAN (Wireless Local Area Network) or Bluetooth® standard, for example.

Figure 2 illustrates further embodiments of a corporate network server 100 and a mobile terminal 110, which may form a system for maintaining corporate contact information in a mobile terminal 110.

The corporate network server 100 comprises an aggregate module 200 to collect corporate contact information electronically, a package module 202 to package the corporate contact information electronically, and a transmit module 204 to transmit wirelessly the corporate contact information to a mobile terminal 204. The aggregate module 200 may collect the corporate contact information from at least one back-end server 102, 104 of the corporation, or from other computing resources within or outside the corporation. The package module 202 may convert the collected corporate contact information from a server format to a format suitable for the mobile terminal 110.

The corporate network server 100 may be implemented as at least one electronic digital computer, which may comprise a working memory (RAM), a central processing unit (CPU), and a system clock. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary, depending on the CPU design. The program instructions may be coded by a programming language, which may be a high-level programming language, such as C, Java, etc., or a low-level programming language, such as a machine language, or an assembler. The electronic digital computer may also have an operating system which may provide system services to a computer program written with the program instructions. An embodiment provides a computer program comprising program instructions, which, when loaded into the corporate network server 100, constitute the modules 200, 202, 204.

The computer program may be in source code form, object code form, or in some intermediate form, and it may be stored in some sort of carrier, which may be any entity or device capable of carrying the program. Such carriers include a record medium, a computer memory, a read-only memory, an electrical carrier signal, a telecommunications signal, and a software distribution package, for example. Depending on the processing power needed, the computer program may be executed in a single electronic digital computer or it may be distributed amongst a number of computers.

The mobile terminal 110 comprises an interface module 208 to receive wirelessly corporate contact information from a corporate network server 100, and to store the received corporate contact information in a corporate address book 218. The corporate contact information may include a telephone number or some other communication equipment identifier or subscriber identifier, a name of a person, a title of the person, name of the organization the person belongs to, location of the person, and other information maintained by the corporation. The corporate contact information may cover the persons working for the corporation and/or persons working outside the corporation, such as clients of the corporation or other interest groups.

The mobile terminal 110 also comprises a search module 210 to search the corporate address book 218 for corporate contact information with an identifier of incoming wireless communication 222. The incoming wireless communication 222 may be any communication terminating in the mobile terminal 110, such as a call or a message (a Short Message Service SMS message, a Multimedia Message Service MMS message, or an electronic mail message, for example). The identifier of such communication may be a telephone number, a mobile telephone number, an electronic mail address, a Transmission Control Protocol / Internet Protocol TCP/IP address, or any other means to identify incoming wireless communication.

The mobile terminal 110 also comprises a presentation module 212 to present the found corporate contact information to a user of the mobile terminal in relation to the incoming wireless communication 222. The presentation module 212 may co-operate with a user interface 216 of the mobile terminal 110 in presenting the found contact information. The user interface 216 may include a display with which the found contact information is displayed. Additional presentation means, such as sound, may also be used for presenting the found contact information. Besides the name of the person, also other contact information may be presented, such as a title of the person, name of the organization the person belongs to, location of the person, and other information maintained by the corporation on that person.

Besides the corporate address book 218, the mobile terminal 110 may also comprise a personal address book 220, in which case the mobile terminal 110 also comprises a user interface module within a user interface 216 to maintain personal contact information in the personal address book 220. The search module 210 may also search the personal address book 220 for personal contact information with the identifier of the incoming communication, and the presentation module 212 may also present the found personal contact information to the user of the mobile terminal 110 in relation to the incoming wireless communication 222. The search module 210 and/or the presentation module 212 may prefer personal contact information over corporate contact information, i.e. if both personal contact information and corporate contact information are found with an identifier of incoming wireless communication 222, primarily or only the personal contact information is presented to the user.

In order to simplify the maintenance of the corporate address book 218, the interface module 208 may write-protect the corporate address book 218 after storing it. Each time corporate contact information 224 transmitted from the corporate network server 100 necessitates an update of the corporate address book 218, the interface module 208 may remove the write-protection for the duration of such update. Especially regarding this embodiment, but also otherwise, the mobile terminal 110 may further comprise a copy module 214 to copy corporate contact information from the corporate address book 218 into a personal address book 220. The user can modify the corporate contact information copied into the personal address book 220 with the user interface 216. The user may add a nickname of a person copied into the personal address book 220 to corporate contact information; the nickname may then be displayed in relation to incoming wireless communication from that person.

The mobile terminal 110 may further comprise an update module 206 to initiate reception of corporate contact information with the interface module 208
- on user request made with a user interface 216 of the mobile terminal 110,
- periodically,
- at a predetermined time measured with a clock of the mobile terminal 110, or
- when initiated by the corporate network server 100. The first option necessitates a user operation, i.e. the update is semi-automatic, but the following three operations may be performed fully automatically.

As shown in Figure 2, the packaged corporate contact information transmission 118 may be initiated by the corporate network server 100, or it may be requested from the corporate network server 100 with a request message 224 from the mobile terminal 100.

The mobile terminal 110 may be regarded as a very special type of an electronic digital computer. An embodiment provides a computer program comprising program instructions, which, when loaded into a mobile terminal 110, at least partly constitute the modules 206, 208, 210, 212, 214, 216, 218, 220 of the mobile terminal 110. However, these modules may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the mobile terminal 110, necessary processing capacity, production costs, and production volumes, for example.

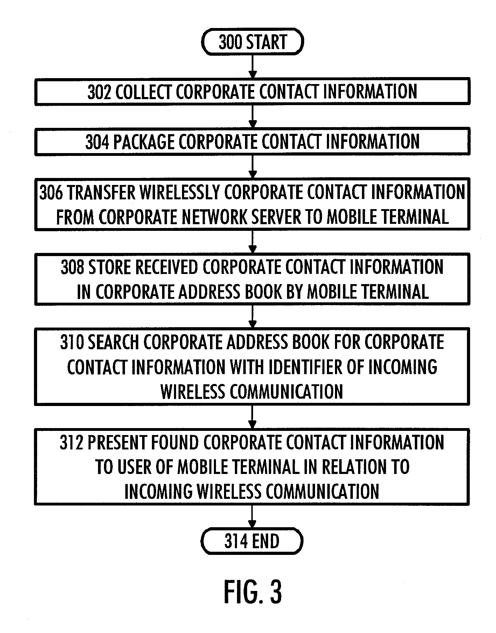

Figure 3 illustrates an embodiment of a method for maintaining corporate contact information in a mobile terminal 110. The method starts in 300. In 302, corporate contact information is collected electronically, and in 304, the corporate contact information is packaged electronically. Next, corporate contact information is transferred wirelessly from a corporate network server to a mobile terminal in 306. In 308, the received corporate contact information is stored in a corporate address book by the mobile terminal. These collecting and storage operations may be repeated when necessary. In 310, the corporate address book is searched for corporate contact information with an identifier of incoming wireless communication, and in 312, the found corporate contact information is presented to a user of the mobile terminal in relation to the incoming wireless communication. These searching and presentation operations may be repeated in relation to each occasion of incoming wireless communication. The method ends in 314. The embodiments of the corporate network server 100 and the mobile terminal 110 may be applied to the method as well.

The corporate address book 220 may naturally be used for initiating outgoing wireless communications as well. In such a case, the user of the mobile terminal 110 searches with the user interface 216 for corporate contact information and initiates a call or a message, for example, with the found corporate contact information.

Even though the invention has been described above with reference to an example according to the accompanying drawings, it is clear that the invention is not restricted thereto but it can be modified in several ways within the scope of the appended claims.

## Claims

1. A mobile terminal comprising:
an interface module to receive wirelessly corporate contact information from a corporate network server, and to store the received corporate contact information in a corporate address book;
a search module to search the corporate address book for corporate contact information with an identifier of incoming wireless communication; and
a presentation module to present the found corporate contact information to a user of the mobile terminal in relation to the incoming wireless communication.

2. The mobile terminal of claim 1, further comprising a user interface module to maintain personal contact information in a personal address book.

3. The mobile terminal of claim 2, wherein the search module also searches the personal address book for personal contact information with the identifier of the incoming communication.

4. The mobile terminal of claim 3, wherein the presentation module also presents the found personal contact information to the user of the mobile terminal in relation to the incoming wireless communication.

5. The mobile terminal of claim 4, wherein the search module and/or the presentation module prefers personal contact information over corporate contact information.

6. The mobile terminal of any preceding claim, wherein the interface module write-protects the corporate address book after storing it.

7. The mobile terminal of any preceding claim, further comprising a copy module to copy corporate contact information from the corporate address book into a personal address book.

8. The mobile terminal of any preceding claim, further comprising an update module to initiate reception of corporate contact information with the interface module on user request made with a user interface of the mobile terminal, periodically, at a predetermined time measured with a clock of the mobile terminal, or when initiated by the corporate network server.

9. A computer program comprising program instructions, which, when loaded into a mobile terminal, constitute the modules of any of claims 1 to 8.

10. A corporate network server comprising:
an aggregate module to collect corporate contact information electronically;
a package module to package the corporate contact information electronically; and
a transmit module to transmit wirelessly the corporate contact information to a mobile terminal.

11. The corporate network server of claim 9, wherein the aggregate module collects the corporate contact information from at least one back-end server of the corporation.

12. The corporate network server of claim 9 or 10, wherein the package module converts the collected corporate contact information from a server format to a format suitable for the mobile terminal.

13. A computer program comprising program instructions, which, when loaded into a corporate network server, constitute the modules of any of claims 10 to 12.

14. A system for maintaining corporate contact information in a mobile terminal, the system comprising:
a mobile terminal comprising:
an interface module to receive wirelessly corporate contact information from a corporate network server, and to store the received corporate contact information in a corporate address book;
a search module to search the corporate address book for corporate contact information with an identifier of incoming wireless communication; and
a presentation module to present the found corporate contact information to a user of the mobile terminal in relation to the incoming wireless communication; and
a corporate network server comprising:
an aggregate module to collect corporate contact information electronically;
a package module to package the corporate contact information electronically; and
a transmit module to transmit wirelessly the corporate contact information to the mobile terminal.

15. A method for maintaining corporate contact information in a mobile terminal, the method comprising:
collecting corporate contact information electronically;
packaging the corporate contact information electronically;
transferring wirelessly corporate contact information from a corporate network server to a mobile terminal;
storing the received corporate contact information in a corporate address book by the mobile terminal;
searching the corporate address book for corporate contact information with an identifier of incoming wireless communication; and
presenting the found corporate contact information to a user of the mobile terminal in relation to the incoming wireless communication.

16. A mobile terminal comprising:
means for receiving wirelessly corporate contact information from a corporate network server;
means for storing the received corporate contact information in a corporate address book;
means for searching the corporate address book for corporate contact information with an identifier of incoming wireless communication; and
means for presenting the found corporate contact information to a user of the mobile terminal in relation to the incoming wireless communication.

17. A corporate network server comprising:
means for collecting corporate contact information electronically;
means for packaging the corporate contact information electronically; and
means for transmitting wirelessly the corporate contact information to a mobile terminal.
